# EUROPEAN PATENT APPLICATION

(11) **EP 1 762 887 A1**
(43) Date of publication of application: **14.03.2007**
(21) Application number: 06254300.4
(22) Date of filing: 16.08.2006
(51) Int. Cl.: G02F 1/13357, G02B 6/00

(54) **Photoluminescent liquid crystal display**

(30) Priority: 10.09.2005 KR 20050084422
(71) Applicant: Samsung Electronics Co., Ltd., Suwon-si Gyeonggi-do (KR)
(72) Inventor: Im, Seung-jae, Seoul (KR); Choi, Jae-young 155-802 Hwanggol Maeul, Yeongtong-gu Suwon-si Gyeonggi-do (KR); Zeng, Xiaoqing Samsung Adv. Inst. of Technology, Giheung-gu Yongin-si Gyeonggi-do (KR); Kim, Byung-ki, Gunpo-si Gyeonggi-do (KR)
(74) Representative: Greene, Simon Kenneth

(57) **Abstract**

Provided is a photoluminescent liquid crystal display, LCD. The LCD includes a lower substrate (100) and an upper substrate (120) disposed apart from each other opposite each other; a liquid crystal layer (140) interposed between the lower (100) and upper substrates (120); a backlight unit (150) prepared under the lower substrate (100) and for emitting blue light; a phosphor layer (127) disposed on the upper substrate (120) and excited by the blue light, which travels from the backlight unit (150) through the liquid crystal layer (140) and the upper substrate (120), to emit light, the phosphor layer containing a red phosphor (127R) disposed in a red pixel region and a green phosphor (127G) disposed in a green pixel region; and a color filter layer (128) disposed on the phosphor layer and for preventing the red and green phosphors from being excited by ambient light to emit light, the color filter layer (128) including an R filter (128R) disposed on the red phosphor (127R) and a green filter disposed on the green phosphor (127G).

## Description

The present invention relates to a liquid crystal display (LCD), and more particularly, to a photoluminescent LCD that improves the contrast of an image.

A cathode ray tube (CRT) monitor has been conventionally used to display data of televisions and computers. In recent years, as a large-sized and slim screen is on an increasing trend, flat panel displays (FPDs), such as a liquid crystal display (LCD), a plasma display panel (PDP), and a field emission display (FED), have been utilized. Among the FPDs, the LCD has been popularly adopted for monitors of televisions and computers because it consumes small power.

A conventional LCD is a light-receiving LCD including a color filter that transmits white light modulated by a liquid crystal (LC) layer to create a desired colored image. Here, the color filter includes red(R), G(G), and blue(B) filters. However, in this light-receiving LCD, since each of the R, G, and B color filters transmits only predetermined colored light, only 1/3 the white light is used to increase a loss of light. Therefore, the conventional light-receiving LCD has a specific technical limit in embodying an image with sufficient brightness.

In order to solve the low luminance of the light-receiving LCD, Breddels et al. proposed a photoluminescent LCD using phosphors. According to Breddels et al., phosphors are provided on an inner surface of a front substrate, and a mercury lamp that emits ultraviolet (UV) light with a wavelength of 360-370 nm is used as a light source. However, the UV light with the wavelength of 360-370 nm is partially absorbed into an LC layer, thus reducing the energy of UV light used for excitation of phosphors. Also, the LC layer may be degraded by the absorbed UV light and is very likely to have a shortened span of life.

To overcome the foregoing drawbacks, a novel photoluminescent LCD was taught in U.S. Patent No. 6,844,903 as shown in FIG. 1.

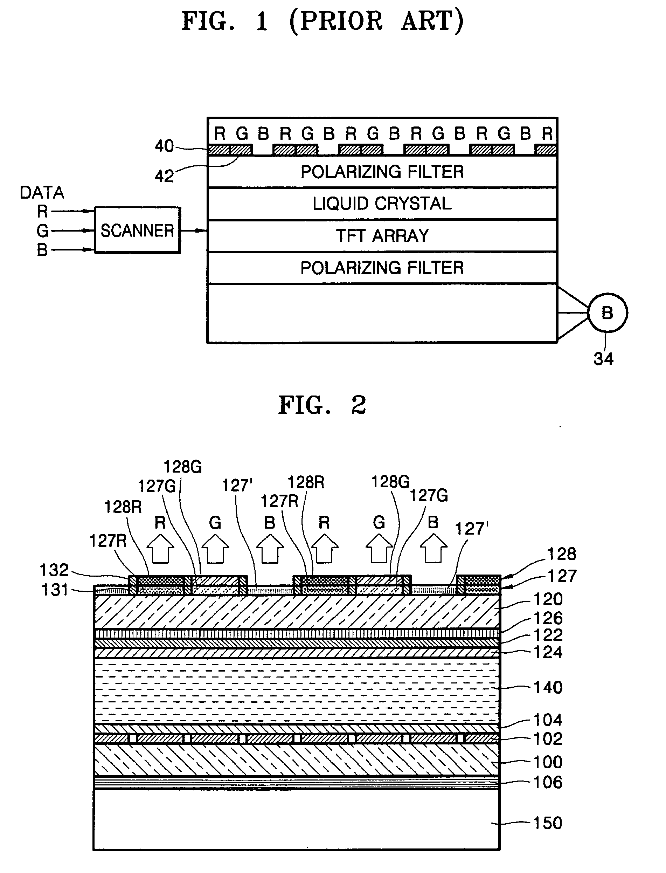

Referring to FIG. 1, a B light source 34 that emits B light with a wavelength of about 460 nm is used as a backlight unit, and R and G phosphors 40 and 42 are used as phosphors. Thus, the R and G phosphors 40 and 42 are excited by the light emitted by the B light source 34 and emit R and G light in R and G pixel regions, respectively. Also, the light emitted by the B light source 34 is directly emitted as B light in a B pixel region. However, in the foregoing LCD, the R and G phosphors 40 and 42 are excited also by B light contained in ambient visible light. As a result, the R and G phosphors 40 and 42 also emit unnecessary R and G light, thus lowering the contrast of an image.

The present invention provides a photoluminescent liquid crystal display (LCD) that may improve the contrast of an image.

According to an aspect of the present invention, there is provided a photoluminescent LCD including a lower substrate and an upper substrate disposed apart from each other opposite each other; a liquid crystal (LC) layer interposed between the lower and upper substrates; a backlight unit prepared under the lower substrate and for emitting blue (B) light; a phosphor layer disposed on the upper substrate and excited by the B light, which travels from the backlight unit through the LC layer and the upper substrate, to emit light, the phosphor layer containing a red (R) phosphor disposed in an R pixel region and a green (G) phosphor disposed in a G pixel region; and a color filter layer disposed on the phosphor layer and for preventing the R and G phosphors from being excited by ambient light to emit light, the color filter layer including an R filter disposed on the R phosphor and a G filter disposed on the G phosphor.

Here, a B pixel region of the phosphor layer may directly transmit the B light, which travles from the backlight unit through the LC layer and the upper substrate.

A transparent substrate may be further prepared between the phosphor layer and the color filter layer or on the color filter layer.

The backlight may emit B light with a wavelength of 420 to 500 nm, preferably, 435 to 470 nm. The backlight unit may include a blue light emitting diode (LED) or a blue organic light emitting diode (OLED).

The B pixel region of the phosphor layer may be filled with a diffusion member that diffuses and emits incident light. Also, the color filter layer may further include a B filter disposed on the diffusion member.

According to another aspect of the present invention, there is provided a photoluminescent LCD including a lower substrate and an upper substrate disposed apart from each other opposite each other; an LC layer interposed between the lower and upper substrates; a backlight unit prepared under the lower substrate and for emitting B light; a phosphor layer disposed between the LC layer and the upper substrate and excited by the B light, which travels from the backlight unit through the LC layer, to emit light, the phosphor layer containing an R phosphor disposed in an R pixel region and a G phosphor disposed in a G pixel region; and a color filter layer disposed between the phosphor layer and the upper substrate and for preventing the R and G phosphors from being excited by ambient light to emit light, the color filter layer including an R filter disposed on the R phosphor and a G filter disposed on the G phosphor.

The above and other features and advantages of the present invention will become more apparent by describing in detail exemplary embodiments thereof with reference to the attached drawings in which:
FIG. 1 is a diagram of a conventional photoluminescent LCD;
FIG. 2 is a cross sectional view of a photoluminescent LCD according to an exemplary embodiment of the present invention;
FIG. 3 is a cross sectional view of a modified example of the photoluminescent LCD shown in FIG. 2;
FIG. 4 is a cross sectional view of another modified example of the photoluminescent LCD shown in FIG. 2;
FIG. 5 is a cross sectional view of a photoluminescent LCD according to another exemplary embodiment of the present invention;
FIG. 6 is a cross sectional view of a modified example of the photoluminescent LCD shown in FIG. 5; and
FIG. 7 is a cross sectional view of a photoluminescent LCD according to yet another exemplary embodiment of the present invention.

A photoluminescent LCD according to the present invention will now be described more fully hereinafter with reference to the accompanying drawings, in which exemplary embodiments of the invention are shown. The same reference numerals are used to denote the same elements in the drawings.

FIG. 2 is a cross sectional view of a photoluminescent LCD according to an exemplary embodiment of the present invention.

Referring to FIG. 2, a lower substrate 100 and an upper substrate 120 are disposed a predetermined distance apart from each other opposite each other. Generally, each of the lower substrate 100 and the upper substrate 120 is a transparent glass substrate. A liquid crystal (LC) layer 140 is interposed between the lower substrate 100 and the upper substrate 120. The LC layer 140 contains LC molecules, which are arranged in a predetermined direction and switch light emitted by a backlight unit 150 in each pixel when a voltage is applied between the lower substrate 100 and the upper substrate 120. Also, a lower alignment layer 104 and an upper alignment layer 124 are disposed on bottom and top surfaces of the LC layer 140, respectively. The lower and upper alignment layers 104 and 124 serve to uniformly align the LC molecules in the LC layer 140. The lower and upper alignment layers 104 and 124 may be formed of an inorganic material, such as silicon oxide, magnesium oxide, magnesium fluoride, and gold, or an organic material, such as polyimide and polyvinyl alcohol.

A plurality of lower electrode 102 are positioned between the lower substrate 100 and the lower alignment layer 104, and a plurality of upper electrode 122 are positioned between the upper alignment layer 124 and the upper substrate 120. Here, the lower electrodes 102 and the upper electrodes 122 are disposed across each other. The lower electrodes 102 and the upper electrodes 122 may be formed of a transparent conductive material that transmits light, for example, indium tin oxide (ITO), tin oxide (TO), or indium zinc oxide (IZO).

The backlight unit 150 is disposed under the lower substrate 100 as a light source that emits B light toward the LC layer 140. Here, the backlight unit 150 emits B light with a wavelength of 420 to 500 nm, preferably, 435 to 470 nm. The backlight unit 150 may be B light emitting diode (LED) or a blue organic light emitting diode (OLED).

A lower polarizer 106 is disposed between the backlight unit 150 and the lower substrate 100. The lower polarizer 106 polarizes B light traveling from the backlight unit 150 to the LC layer 140. Also, an upper polarizer 126 is disposed between the upper electrode 122 and the upper substrate 120. The upper polarizer 126 polarizes B light traveling from the LC layer 140 to the upper substrate 120. Here, the lower and upper polarizers 106 and 126 may be stacked in different positions from shown in FIG. 2.

A phosphor layer 127 is disposed on a top surface of the upper substrate 120. The phosphor layer 127 is excited by the B light passing through the LC layer 140 and the upper substrate 120 and emits light. In this case, the phosphor layer 127 contains an R phosphor 127R and a G phosphor 127G that are formed in an R pixel region and a G pixel region, respectively. The R phosphor 127R is excited by the B light passing through the LC layer 140 and the upper substrate 120 and emits R light. The G phosphor 127G is excited by the B light passing through the LC layer 140 and the upper substrate 120 and emits G light. Also, a B pixel region of the phosphor layer 127 directly transmits the B light that passes through the LC layer 140 and the upper substrate 120. In this case, the B pixel region of the phosphor layer 127 may be filled with a diffusion member 127' that diffuses and emits the B light passing through the LC layer 140 and the upper substrate 120. Meanwhile, a first black matrix 131 may be disposed between the phosphors of the phosphor layer 127, thus enhancing the contrast property of the LCD.

A color filter layer 128 is disposed on the phosphor layer 127. The color filter layer 128 prevents the R and G phosphors 127R and 127G of the phosphor layer 127 from being excited by ambient light (especially B light included in the ambient light) to emit light. The color filter layer 128 includes an R filter 128R disposed on the R phosphor 127R and a G filter 128G disposed on the G phosphor 127G. The R filter 128R transmits most of R light R emitted from the R phosphor 127R but blocks the B light included in the ambient light, so that it can prevent the R phosphor 127R from being excited by the ambient light to emit light. Similarly, the G filter 128G transmits most of G light G emitted from the G phosphor 127G but blocks the B light included in the ambient light, so that it can prevent the G phosphor 127G from being excited by the ambient light to emit light. Meanwhile, the color filter layer 128 forms a vacant space on the diffusion member 127' that fills the B pixel region of the phosphor layer 127. As a result, the B light B, which is transmitted through the LC layer 140 and the upper substrate 120, is externally diffused and emitted through the diffusion member 127'. In addition, a second black matrix 132 may be disposed between the color filters of the color filter layer 128 to enhance the contrast property of the LCD. The color filter layer 128 of the present invention may be a color filter layer for conventional display devices, for example, LCDs and plasma display panels (PDPs).

The above-described color filter layer 128 may be obtained using a dyeing method, a pigment dispersion method, a screen printing method, an electrodeposition method, a spin coating method or an inkjet printing method.

In the foregoing photoluminescent LCD of the present invention, B light travels from the backlight unit 150 through the LC layer 140 and the upper substrate 120 and excites the R and G phosphors 127R and 127G of the phosphor layer 127 so that the R and G phosphor layers 127R and 127G emit R and G light R and G, respectively. The emitted R and G light R and G passes through the R filter 128R and the G filter 128G of the color filter layer 128 and is mostly externally emitted. Also, the R light incident on the diffusion member 127' of the phosphor layer 127 is diffused and externally emitted. Here, the R and G filters 128R and 128G of the color filter layer 128 block B light included in the ambient light so that they can prevent the R and G phosphors 127R and 127G of the phosphor layer 127 from being excited by ambient light to emit light. As a result, the LCD can improve the contrast of an image.

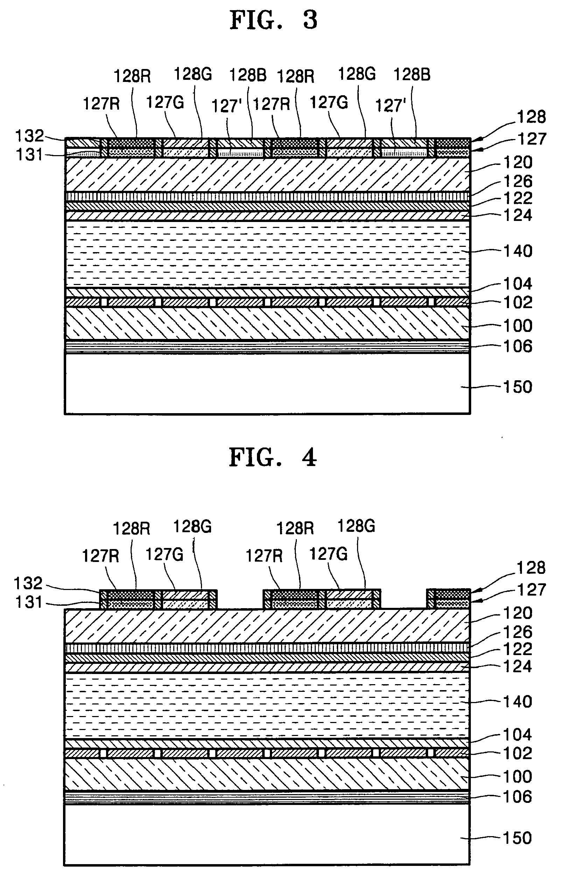

FIG. 3 is a cross sectional view of a modified example of the photoluminescent LCD shown in FIG. 2. Referring to FIG. 3, the color filter layer 128 may further include a B filter 128B disposed on the diffusion member 127' of the phosphor layer 127. In this case, B light B, which is incident onto the diffusion member 127' through the LC layer 140 and the upper substrate 120, is mostly transmitted through the blue filter 128B of the color filter layer 128 and externally emitted. FIG. 4 is a cross sectional view of another modified example of the photoluminescent LCD shown in FIG. 2. Referring to FIG. 4, there is neither the diffusion member 127' nor the B filter 128B in the B pixel region of the phosphor layer 127. In this case, B light B, which is incident onto the B pixel region of the phosphor layer 127 through the LC layer 140 and the upper substrate 120, directly passes through the phosphor layer 127 and the color filter layer 128 and is externally emitted.

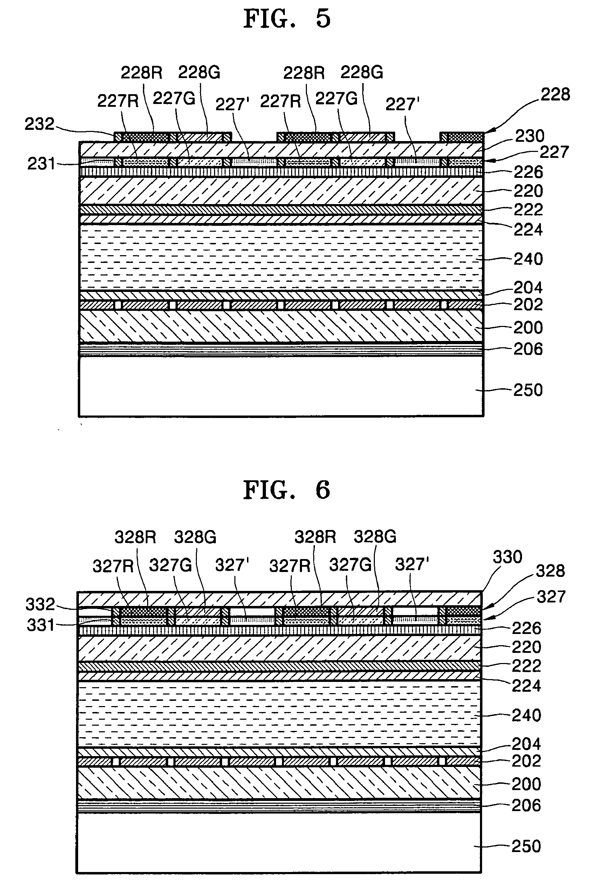

FIG. 5 is a cross sectional view of a photoluminescent LCD according to another exemplary embodiment of the present invention. In the present embodiment, characteristics that differ from in the previous embodiment will be principally described for brevity of explanation.

Referring to FIG. 5, a lower substrate 200 and an upper substrate 220 are disposed a predetermined distance apart from each other opposite each other, and an LC layer 240 is interposed between the lower substrate 200 and the upper substrate 220. Also, a lower alignment layer 204 and an upper alignment layer 224 are disposed on bottom and top surfaces of the LC layer 240, respectively. A plurality of lower electrode 202 are positioned between the lower substrate 200 and the lower alignment layer 204, and a plurality of upper electrode 222 are positioned between the upper alignment layer 224 and the upper substrate 220. Here, the lower electrodes 202 and the upper electrodes 222 are formed of a transparent conductive material that transmits light.

A backlight unit 250 is disposed under the lower substrate 200 as a light source that emits B light toward the LC layer 240. Here, the backlight unit 250 emits the B light with a wavelength of 420 to 500 nm, preferably, 435 to 470 nm. The backlight unit 250 may be a blue LED or a blue OLED. Also, a lower polarizer 206 is disposed between the backlight unit 250 and the lower substrate 200, and an upper polarizer 226 is disposed on a top surface of the upper substrate 220. Here, the lower and upper polarizers 206 and 226 may be stacked in different positions from shown in FIG. 5.

A phosphor layer 227 is disposed on a top surface of the upper polarizer 226. The phosphor layer 227 is excited by the B light passing through the LC layer 240 and the upper substrate 220 and emits light. The phosphor layer 227 contains an R phosphor 227R and a G phosphor 227G that are formed in an R pixel region and a G pixel region, respectively. In this case, the R phosphor 227R is excited by the B light passing through the LC layer 240 and emits R light. The G phosphor 227G is excited by the B light passing through the LC layer 240 and emits G light. Also, a B pixel region of the phosphor layer 227 directly transmits the B light B that passes through the LC layer 240 and the upper substrate 220. In this case, the B pixel region of the phosphor layer 227 may be filled with a diffusion member 227' that diffuses and emits the B light passing through the LC layer 240 and the upper substrate 220. Meanwhile, a first black matrix 231 may be disposed between the phosphors of the phosphor layer 227.

A transparent substrate 230 having a predetermined thickness is disposed on a top surface of the phosphor layer 227. Here, the transparent substrate 230 is typically a glass substrate. A color filter layer 228 is disposed on a top surface of the transparent substrate 230. The color filter layer 228 prevents the R and G phosphors 227R and 227G of the phosphor layer 227 from being excited by ambient light (especially B light included in the ambient light) to emit light. The color filter layer 228 includes an R filter 228R disposed on the R phosphor 227R and a G filter 228G disposed on the G phosphor 227G. The R filter 228R transmits most of R light R, which travels from the R phosphor 227R through the transparent substrate 230, but blocks the B light included in the ambient light, so that it can prevent the R phosphor 227R from being excited by the ambient light to emit light. Similarly, the G filter 228G transmits most of G light G, which travels from the G phosphor 227G through the transparent substrate 230, but blocks the B light included in the ambient light, so that it can prevent the G phosphor 227G from being excited by the ambient light to emit light. Meanwhile, the color filter layer 228 forms a vacant space on the diffusion member 227' that fills the B pixel region of the phosphor layer 227. As a result, the B light B, which is incident onto the diffusion member 227' through the LC layer 240 and the upper substrate 220, is externally emitted through the transparent substrate 230. Meanwhile, the color filter layer 228 may further include a B filter (not shown) disposed on the diffusion member 227' of the phosphor layer 227. In addition, a second black matrix 232 may be disposed between the color filters of the color filter layer 228.

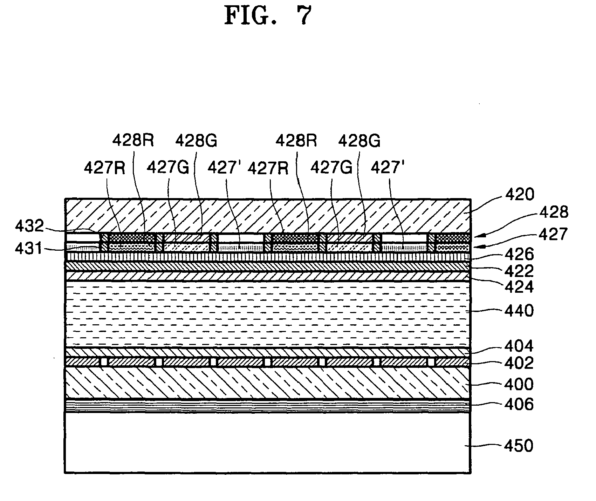

FIG. 6 is a cross sectional view of a modified example of the photoluminescent LCD shown in FIG. 5. Referring to FIG. 6, a phosphor layer 327 is disposed on the top surface of the upper polarizer 226 and contains an R phosphor 327R and a G phosphor 327G that are disposed in the R pixel region and the G pixel region, respectively. And, the B pixel region of the phosphor layer 327 may be filled with a diffusion member 327' that diffuses and emits incident B light. A color filter layer 328 is disposed on a top surface of the phosphor layer 327. The color filter layer 328 includes an R filter 328R disposed on the R phosphor 327R and a G filter 328G disposed on the G phosphor 327G. Meanwhile, the color filter layer 328 may further include a blue filter (not shown) disposed on the diffusion member 327' of the phosphor layer 327. A transparent substrate 330 having a predetermined thickness is disposed on a top surface of the color filter layer 328. Here, the transparent substrate 330 is typically a glass substrate. In FIG. 7, reference numerals 331 and 332 denote a first black matrix and a second black matrix, respectively.

FIG. 7 is a cross sectional view of a photoluminescent LCD according to yet another exemplary embodiment of the present invention. In the present embodiment, characteristics that differ from in the previous embodiments will be principally described for brevity of explanation.

Referring to FIG. 7, a lower substrate 400 and an upper substrate 420 are disposed a predetermined distance apart from each other opposite each other, and an LC layer 440 is interposed between the lower substrate 400 and the upper substrate 420. Generally, each of the lower substrate 400 and the upper substrate 420 is a transparent glass substrate. Also, a lower alignment layer 404 and an upper alignment layer 424 are disposed on bottom and top surfaces of the LC layer 440, respectively. A plurality of lower electrode 402 are positioned between the lower substrate 400 and the lower alignment layer 404, and a plurality of upper electrode 422 are positioned between the upper alignment layer 424 and the upper substrate 420.

A backlight unit 450 is disposed under the lower substrate 400 as a light source that emits B light toward the LC layer 440. Here, the backlight unit 450 emits B light with a wavelength of 420 to 500 nm, preferably, 435 to 470 nm. The backlight unit 450 may be a blue LED or a blue OLED. Also, a lower polarizer 406 is disposed between the backlight unit 450 and the lower substrate 400, and an upper polarizer 426 is disposed between the upper electrode 422 and the upper substrate 420. Here, the lower polarizer 406 and the upper polarizer 426 may be stacked in different positions from shown in FIG. 7.

A phosphor layer 427 and a color filter layer 428 are disposed between the upper polarizer 426 and the upper substrate 420. To be specific, the phosphor layer 427 is disposed on a top surface of the upper polarizer 426. The phosphor layer 427 is excited by the B light passing through the LC layer 440 and emits light. The phosphor layer 427 contains an R phosphor 427R and a G phosphor 427G that are formed in an R pixel region and a G pixel region, respectively. In this case, the R phosphor 427R is excited by the B light passing through the LC layer 440 and emits R light. The G phosphor 427G is excited by the B light passing through the LC layer 440 and emits G light. Also, a B pixel region of the phosphor layer 427 directly transmits the B light B that passes through the LC layer 440. In this case, the B pixel region of the phosphor layer 427 may be filled with a diffusion member 427' that diffuses and emits the B light passing through the LC layer 440. Meanwhile, a first black matrix 431 may be disposed between the of the phosphor layer 427.

The color filter layer 428 is disposed between the phosphor layer 427 and the upper substrate 420. The color filter layer 428 prevents the R and G phosphors 427R and 427G of the phosphor layer 427 from being excited by ambient light (especially B light included in the ambient light) to emit light. The color filter layer 428 includes an R filter 428R disposed on the R phosphor 427R and a G filter 428G disposed on the G phosphor 427G. The R filter 428R transmits most of R light R emitted from the R phosphor 427R but blocks the B light included in the ambient light, so that it can prevent the R phosphor 427R from being excited by the ambient light to emit light. Similarly, the G filter 428G transmits most of G light G emitted from the G phosphor 427G but blocks the B light included in the ambient light, so that it can prevent the G phosphor 427G from being excited by the ambient light to emit light. Meanwhile, the color filter layer 428 forms a vacant space on the diffusion member 427' that fills the B pixel region of the phosphor layer 427. As a result, the B light B, which is incident onto the diffusion member 427' through the LC layer 440, is externally emitted through the transparent upper substrate 420. Meanwhile, the color filter layer 428 may further include a B filter (not shown) disposed on the diffusion member 427' of the phosphor layer 427. In addition, a second black matrix 432 may be disposed between the color filters of the color filter layer 428.

According to the present invention as described above, the photoluminescent LCD includes a color filter layer that blocks B light included in ambient light, thus preventing R and G phosphors of a phosphor layer from being excited by the ambient light to emit light. As a result, the photoluminescent LCD can improve the contrast of an image.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A photoluminescent liquid crystal display comprising:
a lower substrate (100) and an upper substrate (120) disposed apart from each other opposite each other;
a liquid crystal (140), LC, layer interposed between the lower (100) and upper (120) substrates;
a backlight unit (150) prepared under the lower substrate (100) and for emitting blue, B, light;
a phosphor layer (127) disposed on the upper substrate (120) and arranged to be excited by the B light, which is arranged to travel from the backlight unit (150) through the LC layer (140) and the upper substrate (120), to emit light, the phosphor layer (127) containing a red, R, phosphor (127R) disposed in an R pixel region and a green, G, phosphor (127G) disposed in a G pixel region; and
a color filter layer (128) disposed on the phosphor layer (127) and for preventing the R (127R) and G (127G) phosphors from being excited by ambient light to emit light, the color filter layer (128) including an R filter (128R) disposed on the R phosphor (127R) and a G filter (128G) disposed on the G phosphor (127G).

2. The LCD of claim 1, wherein a B pixel region of the phosphor layer (127) is arranged to directly transmit the B light, which is arranged to travel from the backlight unit (150) through the LC layer (140) and the upper substrate (120).

3. The LCD of claim 1 or 2, further comprising a transparent substrate (230) interposed between the phosphor layer (227) and the color filter layer (228).

4. The LCD of claim 1 or 2, further comprising a transparent substrate (230) disposed on the color filter layer (228).

5. The LCD of any preceding claim, wherein the backlight unit (150) is arranged to emit B light with a wavelength of 420 to 500 nm.

6. The LCD of any of claims 1 to 4, wherein the backlight unit (150) is arranged to emit B light with a wavelength of 435 to 470 nm.

7. The LCD of any preceding claim, wherein the backlight unit (150) includes one of a blue light emitting diode and a blue organic light emitting diode.

8. The LCD of any preceding claim, wherein a B pixel region of the phosphor layer (127) is filled with a diffusion member (127) that is arranged to diffuse and to emit incident light.

9. The LCD of claim 8, wherein the color filter layer (128) further includes a B filter disposed on the diffusion member (127).

10. A photoluminescent LCD comprising:
a lower substrate (400) and an upper substrate (420) disposed apart from each other opposite each other;
an LC layer (440) interposed between the lower (400) and upper (420) substrates;
a backlight unit (450) prepared under the lower substrate and for emitting B light;
a phosphor layer (427) disposed between the LC layer (440) and the upper substrate (420) and arranged to be excited by the B light, which is arranged to travel from the backlight unit (450) through the LC layer (440), to emit light, the phosphor layer (427) containing an R phosphor (427R) disposed in an R pixel region and a G phosphor (427G) disposed in a G pixel region; and
a color filter layer (428) disposed between the phosphor layer (427) and the upper substrate (420) and for preventing the R (427R) and G (427G) phosphors from being excited by ambient light to emit light, the color filter layer (428) including an R filter (428R) disposed on the R phosphor (427R) and a G filter (428G) disposed on the G phosphor (427G).

11. The LCD of claim 10, wherein a B pixel region of the phosphor layer (427) is arranged to directly transmit the B light, which is arranged to travel from the backlight unit (450) through the LC layer (440).

12. The LCD of claim 10 or 11, wherein the backlight unit (450) is arranged to emit B light with a wavelength of 420 to 500 nm.

13. The LCD of claim 10 or 11, wherein the backlight unit (450) is arranged to emit B light with a wavelength of 435 to 470 nm.

14. The LCD of any of claims 10 to 13, wherein the backlight unit (450) includes one of a blue LED and a blue OLED.

15. The LCD of any of claims 10 to 14, wherein a B pixel region of the phosphor layer (427) is filled with a diffusion member (427) that is arranged to diffuse and to emit incident light.

16. The LCD of claim 15, wherein the color filter layer (428) further includes a B filter disposed on the diffusion member (427).
